# EUROPEAN PATENT APPLICATION

(11) **EP 0 556 050 A1**
(43) Date of publication of application: **18.08.1993**
(21) Application number: 93301007.6
(22) Date of filing: 11.02.1993
(51) Int. Cl.: C08G 63/688, C08G 63/20

(54) **Modified polyester and method of manufacturing same**

(30) Priority: 12.02.1992 JP 25200/92
(71) Applicant: POLYPLASTICS CO. LTD., Chuo-Ku Osaka-shi Osaka 541 (JP)
(72) Inventor: Kawaguchi, Kuniaki, Numazu-shi, Shizuoka (JP); Hijikata, Kenji, Mishima-shi, Shizuoka (JP); Nakane, Toshio, Fuji-shi, Shizuoka (JP)
(74) Representative: Jackson, Peter

(57) **Abstract**

A modified polyester having excellent mechanical properties such as tenacity which emits only a small amount of a gas by decomposition during use at elevated temperatures for a long period of time and only a small amount of a sublimate in the course of melting it and which is suitable particularly for use as the material of a molding for an electric or electronic component, or a packaging material such as film, sheet or container, characterized by its formation from:
**(A)** an acid component mainly comprising terephthalic acid, 2,6-naphthalenedicarboxylic acid or a lower alcohol ester thereof,
**(B)** a diol component mainly comprising an alkylene glycol having 2 to 8 carbon atoms, and
**(C)** an aromatic sulfonic acid compound of the following general formula (1):

   (1) HO(RO)ₙ-Ar-SO₃M

wherein **Ar** represents a benzene or naphthalene ring,
**n** represents an integer from 1 to 10,
**R** represents a group selected from among alkylenes having 2 or 3 carbon atoms and when **n** is 2 or more, **R** may be the same as or different from one another, and
**M** represents an alkali metal selected from lithium, sodium and potassium, and satisfying the following formulae (2) and (3):

(2) 0.25 ≦ **x** ≦ 100 (meq/kg)

(3) 2 ≦ (**x**/[CEG]) x 100 ≦ 150 (%)

wherein **x** represents the amount of the aromatic sulfonic acid compound represented by the above general formula (1) introduced thereinto and [CEG] represents the amount of the carboxy end groups, and
**x** and [CEG] are each expressed in milliequivalent (meq/kg) per kilogram of the polymer.

In a method of manufacturing the modified polyester, the said components (A), (B) and (C) are reacted together in the presence of a catalyst, component (C) preferably being added before before completion of esterification or transesterification of said acid and diol components (A) and (B).

## Description

### FIELD OF THE INVENTION

The present invention relates to a modified polyester which is excellent in mechanical properties such as tenacity, and is of good chemical stability so that only a small amount of a gas is emitted by decomposition during use at elevated temperatures over a long period of time, and only a small amount of sublimate is generated in melt processing. The invention provides a material which is suitable for the production of a molding for an electrical or electronic component, or a packaging material such as film, sheet or container.

### DESCRIPTION OF THE RELATED ART

Polyalkylene terephthalate represented by polybutylene terephthalate (hereinafter abbreviated to "PBT") is a crystalline thermoplastic resin excellent in mechanical, electrical, chemical and physical properties and is therefore used as an engineering plastic in a wide field including automobiles, electrical and electronic appliances and so on. Particularly, PBT is excellent also in perfume retention and barrier properties to gases such as water vapor, so that it has recently been used favorably also in the field of packaging of food and cosmetic as containers or other packaging materials. Similarly, polyalkylene naphthalate is a highly crystalline thermoplastic resin and is expected to be a useful engineering plastic.

However, these resins cause such a problem in the molding thereof that when they are heated in a molten state, they decompose to generate a gas and/or sublimate, so that the obtained molded articles suffer from voids, and the gas and/or sublimate tends to stain or corrode the mold. Further, the molding of a resin is conducted in a process which is not always continuous but is sometimes intermittent. When a polyalkylene terephthalate or polyalkylene naphthalate resin is molded intermittently, the resin may stay in a molding machine in a molten state for a long time to generate much gas and sublimate. Accordingly, it would be desirable for the above resins to produce lesser amounts of such gas and sublimate.

In addition, when an article molded from the above resin is used either at an elevated temperature of as high as 100°C or above or for a long period even at a lower elevated temperature, the article evolves a gas such as tetrahydrofuran. Accordingly, an electrical or electronic component (such as relay, switch or connector) comprising an article molded from the resin has the disadvantage that the gas stains or corrodes the metal contact of the component to impair its characteristics to a noticeable extent. When the resin is used for the packaging of food, drink and cosmetic as a film, sheet or container, there occur problems in that the contents may absorb an unpleasant smell and the taste of the contents may be impaired. Thus, a reduction in the amount of gas evolved during the use of a molded article of the resin is another problem, the solution of which has been eagerly sought.

### SUMMARY OF THE INVENTION

In view of the above problems, the present inventors have extensively studied to obtain a modified polyester which emits only a small amount of a decomposition gas such as tetrahydrofuran when used at an elevated temperature for a long period of time and which emits only a small amount of a sublimate in a molten state, and they have accomplished the present invention.

Thus the present invention relates to a modified polyester characterized by its formation from:
**(A)** an acid component mainly comprising terephthalic acid, 2,6-naphthalenedicarboxylic acid or a lower alcohol ester thereof,
**(B)** a diol component mainly comprising an alkylene glycol having 2 to 8 carbon atoms, and
**(C)** an aromatic sulfonic acid compound of the following general formula (1):

(1) HO(RO)ₙ-Ar-SO₃M

wherein **Ar** represents a benzene or naphthalene ring,
**n** represents an integer from 1 to 10,
**R** represents a group selected from among alkylenes having 2 or 3 carbon atoms and when **n** is 2 or more, **R** may be the same as or different from one another, and
**M** represents an alkali metal selected from lithium, sodium and potassium, and satisfying the following formulae (2) and (3):

(2) 0.25 ≦ x ≦ 100 (meq/kg)

(3) 2 ≦ (x/[CEG]) x 100 ≦ 150 (%)

wherein **x** represents the amount of the aromatic sulfonic acid compound represented by the above general formula (1) introduced thereinto and [CEG] represents the amount of the carboxy end groups, and **x** and [CEG] are each expressed in milliequivalent (meq/kg) per kilogram of the polymer.

For the purposes of this specification, values for **x** and [CEG] are to be determined by the methods which will be described specifically in the Example described hereinafter. The expression that a component "mainly comprises" an ingredient is used herein to denote that such "main" ingredient constitutes at least 50 mole % of that component.

### DETAILED DESCRIPTION OF THE INVENTION

The polyester of the present invention can be prepared by conducting the melt polycondensation of an acid component (A) mainly comprising terephthalic acid, 2,6-naphthalenedicarboxylic acid or a lower alcohol ester thereof with a diol component (B) mainly comprising an alkylene glycol having 2 to 8 carbon atoms in the presence of the above aromatic sulfonic acid component (C). Such polyester mainly comprises ethylene terephthalate, ethylene 2, 6-naphthalate, 1, 3-propylene terephthalate, 1,3-propylene 2,6-naphthalate, 1,4-butylene terephthalate, 1,4-butylene 2,6-naphthalate, cyclohexylenedimethylene terephthalate and/or cyclohexylenedimethylene 2, 6-naphthalate repeating units, and it includes both homopolyesters consisting of one kind of repeating units described above and copolyesters mainly comprising them. Among them polyesters at least mainly comprising 1,4-butylene terephthalate and/or 1,4-butylene 2, 6-naphthalate as the main repeating units are particularly preferred. Examples of the acid component mainly comprising a lower alcohol ester of terephthalic acid include dimethyl ester of terephthalic acid. Those of the acid component mainly comprising a lower alcohol ester of 2,6-naphthalenedicarboxylic acid include dimethyl ester of 2, 6-naphthalenedicarboxylic acid.

For preparing a copolyester according to the present invention, one or more acid components (A) other than the main acid components described above may be additionally used as acid comonomers and the acid components to be used as the comonomers include known difunctional acids and lower alcohol esters thereof such as terephthalic, isophthalic, orthophthalic, 2,6-naphthalenedicarboxylic, 2, 7-naphthalenedicarboxylic, diphenic, 4,4'-diphenyldicarboxylic, adipic, sebacic and 1,4-cyclohexanedicarboxylic acids and dimethyl esters thereof. Further, one or more diol components other than the main diol components described above may be also additionally used as diol comonomers and the diol components to be used as the comonomers include known difunctional diols such as ethylene glycol, diethylene glycol, triethylene glycol, propanediol, 1,4-butanediol, 1,5-pentanediol, 1,6-hexanediol, neopentyl glycol, 1,10-decanediol, 1,4-cyclohexanedimethanol, 1,4-cyclohexanediol, p-xylylene glycol, adducts of hydroquinone with alkylene oxides, those of 2,2-bis(4-hydroxyphenyl)propane with alkylene oxides, those of bis (4-hydroxyphenyl) sulfone with alkylene oxides and those of 2,6-dihydroxynaphthalene with ethylene oxide. Furthermore, halogen-substituted derivatives of these compounds may be used as the comonomers in order to impart flame retardance to the polyester.

The amount of the comonomers to be introduced is preferably at most 30 mole %, still more preferably at most 20 mole % based on all the repeating ester units.

Moreover, the use of a small amount of an at least trifunctional compound such as trimethyl trimesate, trimethyl trimellitate, trimethylolpropane or pentaerythritol; a monofunctional compound such as stearyl alcohol, methyl o-benzoylbenzoate or epoxy compound; a hydroxy carboxylic acid derivative such as methyl p-hydroxy-ethoxyphenylcarboxylate; or a polyalkylene glycol such as polypropylene glycol or polytetrahydrofuran or the use thereof together with the above comonomer component is permitted in the preparation of the polyester of the present invention.

The modified polyester of the present invention is characterized by containing an aromatic sulfonic acid compound (C) represented by the following general formula (1) introduced thereinto as one of the starting compounds in a specific amount:

(1) HO(RO)ₙ-Ar-SO₃M

wherein **Ar** represents a benzene or naphthalene ring, **n** represents an integer from 1 to 10, **R** represents a group selected from among alkylenes having 2 or 3 carbon atoms and when **n** is 2 or more, **R** may be the same as or different from one another, and **M** represents an alkali metal selected from lithium, sodium and potassium.

Specific examples of the aromatic sulfonic acid compound to be used as starting compound include:
sodium 4-(2-hydroxyethoxy)benzenesulfonate,
sodium 4-(2-hydroxypropoxy) benzenesulfonate,
sodium 4-(2-hydroxyethoxyethoxy)benzenesulfonate,
lithium 4-(2-hydroxyethoxy)benzenesulfonate,
potassium 4-(2-hydroxyethoxy)benzenesulfonate,
sodium 2-(2-hydroxyethoxy)naphthalene-6-sulfonate,
sodium 2-(2-hydroxypropoxy)naphthalene-6-sulfonate,
sodium 2-(2-hydroxyethoxyethoxy)naphthalene-6-sulfonate,
lithium 2-(2-hydroxyethoxy)naphthalene-6-sulfonate, and
potassium 2-(2-hydroxyethoxy)naphthalene-6-sulfonate.

These compounds can be prepared by a process which comprises conducting the addition reaction of an alkali metal salt of hydroxybenzenesulfonic or hydroxynaphthalenesulfonic acid with an alkylene oxide such as ethylene oxide though bond cleavage in the presence of a base or acid catalyst, a process which comprises reacting ethylene chlorohydrin with an alkali metal salt of hydroxybenzenesulfonic or hydroxynaphthalenesulfonic acid or other process, and the number, **n**, of the repeating oxyalkylene units can be adjusted to either a single value or a plurality of values by controlling the feed and conversion of alkylene oxide.

According to the present invention, the polyester prepared by the melt polymerization must contain one or more compounds represented by the general formula (1) in such an amount as to satisfy the following general formula (2):

(2) 0.25 ≦ x ≦ 100 (meq/kg)

In the above general formula (2), **x** is the amount of the aromatic sulfonic acid compound chemically introduced into the polyester and is expressed in milliequivalent (meq/kg) per kilogram of the polyester. The introduction of the compound in an amount less than 0.25 meq/kg will be little effective in reducing the amount of a gas evolved in a long-term use at a high temperature (such as tetrahydrofuran) or the amount of sublimate generated in a molten state, while the introduction thereof in an amount exceeding 100 meq/kg will result in a polyester having too low a degree of polymerization and therefore exhibiting remarkably poor elongation, tenacity and other mechanical properties, both cases being undesirable. It is particularly preferable that x be 0.5 to 50 meq/kg. This promotes good chemical stability and good mechanical properties in the polyester.

The invention extends to a method of manufacturing such a modified polyester, and there is accordingly provided such a method which is characterized by reacting in the presence of a catalyst:
**(A)** an acid component mainly comprising terephthalic acid, 2,6-naphthalenedicarboxylic acid or a lower alcohol ester thereof,
**(B)** a diol component mainly comprising an alkylene glycol having 2 to 8 carbon atoms, and
**(C)** an aromatic sulfonic acid compound of the following general formula (1) :

(1) HO(RO)ₙ-Ar-SO₃M

wherein **Ar** represents a benzene or naphthalene ring,
**n** represents an integer from 1 to 10,
**R** represents a group selected from among alkylenes having 2 or 3 carbon atoms and when **n** is 2 or more, **R** may be the same as or different from one another, and
**M** represents an alkali metal selected from lithium, sodium and potassium, and satisfying the following formulae (2) and (3):

(2) 0.25 ≦ x ≦ 100 (meq/kg)

(3) 2 ≦ (x/[CEG] ) x 100 ≦ 150 (%)

wherein **x** represents the amount of the aromatic sulfonic acid compound represented by the above general formula (1) introduced thereinto and [CEG] represents the amount of the carboxy end groups, and **x** and [CEG] are each expressed in milliequivalent (meq/kg) per kilogram of the polymer.

Although the aromatic sulfonic acid compound represented by the above general formula (1) may be added in an arbitrary stage from the step of preparing the monomers to be melt-polymerized up to the completion of the melt polymerization, it is particularly preferable to add the compound in the first half of the melt polymerization step, i.e., in a stage from the preparation of the monomers up to the completion of the transesterification or esterification (for example, to a diol component such as 1,4-butanediol). It has been ascertained that substantially the whole of the compound of the formula (1) used can be chemically introduced into the formed polyester by adding the compound in the above-mentioned preferable stage. A process which comprises adding the compound to the polyester prepared by the melt polymerization and kneading the obtained mixture on an extruder or the like to disperse the compound in the polyester homogeneously is less favorable, because the process necessitates extrusion and kneading steps and most of the aromatic sulfonic compound of the general formula (1) added remains intact, so that the amount of a gas evolved in a long-term use at a high temperature, such as tetrahydrofuran, or the amount of a sublimate generated in a molten state is reduced by a lesser amount.

Preferably, therefore, the aromatic sulfonic acid component (C) is incorporated in the reaction mixture before completion of esterification or transesterification of said acid and diol components (A) and (B).

The aromatic sulfonic acid compound represented by the above general formula (1) may, if desired, be added in several portions at arbitrary stages.

The transesterification of a lower alcohol ester of terephthalic or 2, 6-naphthalenedicarboxylic acid as component (A) with an alkylene glycol having 2 to 8 carbon atoms as component (B) will now be described by taking a case using 1,4-butanediol as the main diol component. The transesterification is conducted by using a lower alcohol ester of terephthalic or 2,6-naphthalenedicarboxylic acid and 1,4-butanediol at a molar ratio of between 1 : 1 and 1 : 2 under normal pressure at a temperature of 150 to 230°C while continuously removing a formed lower alcohol such as methanol. Examples of the catalyst to be used for attaining a practically acceptable reaction rate include titanium compounds, tin compounds, lead oxide, lead acetate, zinc acetate, zinc oxide and manganese acetate, among which organic titanates, titanium tetrachloride and hydrolyzates and alcoholyzates thereof, tin oxide, tin acetate and organo-tin compounds are preferable. Specific examples of catalyst include titanium compounds well-known as a catalyst for the preparation of polyesters, such as tetrabutyl titanate, tetrapropyl titanate, tetraethyl titanate, tetramethyl titanate and hydrolyzates thereof; hydrolyzates of titanium tetrachloride and titanium sulfate; inorganic titanium compounds such as potassium fluorotitanate, zinc fluorotitanate and cobalt fluorotitanate; titanium oxalate and potassium titanium oxalate; and tin compounds well-known as the catalyst for the preparation of polyesters, such as dibutyltin oxide, dibutyltin acetate, dioctyltin diacetate, diphenyltin dilaurylmercaptide, polydibutyltin sebacate, dibutyltin ethylene glycolate, dioctyltin thiosalicylate, diphenyltin benzenesulfonate and dimethyltin p-toluenesulfonate. Particularly preferable examples thereof include tetrabutyl titanate, tetrapropyl titanate, hydrolyzate of titanium tetrachloride, dibutyltin oxide, dibutyltin acetate and dioctyltin diacetate. In using the above titanium or tin compound or a mixture of both as the catalyst, the amount of the titanium or tin compound (or the total amount of the mixture) may be 10 to 1000 ppm, preferably 30 to 800 ppm in terms of titanium and/or tin atoms based on the polymer. If necessary, the catalyst may be added during the reaction in several portions.

The esterification of terephthalic or 2, 6-naphthalenedicarboxylic acid as component (A) with an alkylene glycol having 2 to 8 carbon atoms as component (B) will now be described by taking a case using 1,4-butanediol as the main diol component. The esterification is conducted by using terephthalic or 2,6-naphthalenedicarboxylic acid and 1,4-butanediol at a molar ration of between 1 : 1 and 1 : 5 under normal or elevated pressure at a temperature of 200 to 250°C while continuously removing formed water. It is favorable in many cases that the above esterification be conducted in the presence of a titanium or tin compound as described above.

The polycondensation is conducted by melt-polymerizing the product of the above transesterification or esterification at a temperature of 200 to 270°C in an evacuated system until a desired degree of polymerization is attained while continuously removing 1,4-butanediol and by-products. The above catalyst for the transesterification or esterification can be used as such in the polycondensation to attain a practically acceptable reaction rate. Alternatively, one or more of the compounds described above as the catalyst for the transesterification or esterification may be additionally added prior to the initiation of the polycondensation for the purpose of enhancing the polycondensation rate. Further, a stabilizer such as a hindered phenol or phosphorus compound may be added in the monomer preparation step or the polymerization step and the use of such a stabilizer in a proper amount is favorable to further enhance the effects of the present invention. The introduction of the aromatic sulfonic acid compound (C) scarcely affects the rate of the melt polycondensation and does not hinder the melt polycondensation, so far as the amount of the compound (C) introduced lies within the range defined in the present invention.

The modified polyester prepared by the melt polymerization under the above conditions is one having an intrinsic viscosity of 0.5 to 1.2 dl/g in o-chlorophenol at 25°C, which is then solidified by cooling and then pulverized or granulated. Since it is preferred that a polyester for packaging material have a high degree of polymerization, the modified polyester may be subjected to solid-state polymerization, if necessary, depending upon its intended use. The solid-state polymerization thereof may be conducted by a conventional process. That is, it can be conducted by transferring finely divided pellets of the modified polyester to a reactor fitted with a suitable gas inlet, an exhaust vent, a vacuum connector and so on, and keeping the divided pellets at a temperature lower than the melting point of the polyester by 5°C to 60°C either in an inert gas stream or in a vacuum to thereby polymerize the modified polyester. The reactor may be either of batch type or of continuous type and the desired degree of polymerization can be attained by suitably controlling the residence time and treatment temperature.

The modified polyester must contain after the melt polymerization or the solid-state polymerization one or more compounds represented by the general formula (1) in such an amount as to satisfy not only the above formula (2) but also the following formula (3):

(3) 2 ≦ (x/[CEG]) x 100 ≦ 150

In the above general formula (3), **x** represents the amount of the aromatic sulfonic acid introduced and [CEG] represents the amount of the carboxyl end groups, which are each expressed in milliequivalent (meq/kg) per kilogram of the polymer. When the ratio is lower than 2%, the amount of the decomposition gas evolved in long-term use at high temperature, such as tetrahydrofuran, or the amount of the sublimate generated in a molten state will be little reduced, while when it exceeds 150%, not only the above amounts will be little reduced but also the obtained polyester will be remarkably poor in mechanical properties (such as elongation and tenacity) owing to the low degree of polymerization thereof, both cases being undesirable. In other words, the objective effects of the present invention can be sufficiently exhibited only when the above ratio lies within the specific range defined by the above formulae (2) and (3). It is particularly preferable that the **x**/[CEG) ratio range from 3 to 120%, since this promotes chemical stability and good mechanical properties.

In the present invention, the amount of the aromatic sulfonic acid compound introduced, i.e., **x**, and the amount of the carboxyl end groups, i.e., [CEG], must be controlled each to be within such specific ranges as to satisfy the formulae (2) and (3). The former is nearly equal to the value calculated from the amount of the compound fed in the preparation of the polyester as will be described below, so that it can be easily controlled. On the other hand, the latter can be controlled by suitably selecting the conditions of the melt polymerization or the solid-state polymerization. That is, a polyester satisfying the requirements of the present invention can be prepared by controlling the polymerization temperature, temperature rise rate, polymerization time, degree of vacuum, evacuation rate, kind and amount of the catalyst and kind and amount of the additive in the melt polymerization, and the polymerization temperature, temperature rise rate, degree of vacuum, evacuation rate, flow rate of stream, residence time, kind and amount of the catalyst and kind and amount of the additive in the solid-state polymerization.

If necessary, the polyester of the present invention may be mixed with one or more members selected from among other thermoplastic resins, additives and organic and inorganic fillers, and used as a composition through melt kneading, so long as the object of the present invention is not hindered. Examples of the thermoplastic resin which may be mixed with the polyester of the present invention include polyester elastomer, polyester resin other than those of the present invention, polyolefin resin, polystyrene resin, polyamide resin, polycarbonate, polyacetal, polyarylene oxide, polyarylene sulfide and fluororesin. Examples of the additive include conventional stabilizers such as ultraviolet absorber and antioxidant, antistatic agent, flame retardant, auxiliary flame retardant, colorants such as dye and pigment, lubricant, plasticizer, slip additive, mold release agent and nucleating agent. Examples of the inorganic filler include glass fibre, milled glass fibre, glass bead, glass flake, silica, alumina fibre, zirconia fibre, potassium titanate fibre, carbon fibre, carbon black, graphite, silicates such as calcium silicate, aluminium silicate, kaolin, talc and clay; metal oxides such as iron oxide, titanium oxide, zinc oxide, antimony oxide and alumina; carbonates and sulfates of metals such as calcium, magnesium and zinc; silicon carbide, silicon nitride and boron nitride. Examples of the organic filler include high-melting aromatic polyester, liquid-crystal polyester, aromatic polyamide, fluororesin and polyimide fibres.

Electrical or electronic components and automobile components are often required to be excellent in flame retardance depending upon the use conditions, so that among the above ingredients, a flame retardant and an auxiliary flame retardant are particularly frequently added to the polyester. Flame retardants usable in this case include known halogen-containing flame retardants such as brominated polycarbonate, brominated epoxy compound, brominated diphenyl and brominated diphenyl ether, while auxiliary flame retardants include antimony compounds such as antimony trioxide, antimony pentaoxide and antimony halides; compounds of metals such as zinc and bismuth; magnesium hydroxide and clayey silicate such as asbestos. Further, the use of a proper amount of a stabilizer such as antioxidant is effective in further enhancing the effects of the present invention.

As described above, the modified polyester of the present invention is excellent in mechanical properties such as elongation and tenacity, and is reduced in the amount of the decomposition gas evolved in a long-term use at a high temperature, such as tetrahydrofuran, and in the amount of the sublimate generated in a molten state, so that it does not worsen the working atmosphere in molding and little stains or erodes attachments such as a mold. Further, an electrical or electronic component (such as relay, switch or connector) produced by molding the modified polyester or a composition thereof has the advantage that staining and/or corrosion of the ancillary parts (such as metal contacts) of the component, result in poor function, is very much reduced and may even be substantially eliminated for the normal expected working life of the article in which that component is incorporated. Furthermore, when the modified polyester resin or the composition is used as a packaging material (such as film sheet or container) for food, drink or cosmetic, the odour or taste of the contents is not impaired. Thus, the modified polyester of the present invention is an excellent material and its industrial utility value is remarkable.

### EXAMPLES

The present invention will now be described further specifically by referring to the following Examples, though the present invention is not limited to them. In the Examples, the characteristics were determined by the following methods:

### (1) DETERMINATION OF AMOUNT OF GAS EVOLVED

An ASTM No. 1 tensile test piece was prepared by injection, pulverized and used as a sample. 5 g of such a sample was allowed to stand in a 20-ml head space at 150°C for one hour to determine the amount of gas evolved by gas chromatography. The weight of the evolved gas was expressed in ppm based on the weight of the sample. The conditions of measurement are as follows:
- equipment:: HP5890A mfd. by Yokogawa-Hewlett- Packard, Ltd,
- column:: HR-1701, 0.32 mm x 30 m,
- column temperatures:: 50°C (1 min) → 5°C/min → 250°C (1 min), and
- detector:: FID.

The molding of the test piece was conducted under the following conditions:
- molding machine:: IS30EPN mfd. by Toshiba Corporation,
- cylinder temperatures:: 260°C (nozzle) - 250°C (third zone) -
240°C (second zone) - 240°C (first zone)
but in Example 8 and Comparative Example 8,
265°C (nozzle) - 255°C (third zone) -
250°C (second zone) - 250°C (first zone),
- mold temperature:: 60°C, and
- screw speed:: 160 rpm.

### (2) DETERMINATION OF MELT-HEATING LOSS

10 mg of a sample as described above was melt heated at 255°C in an air flow for 30 minutes to determine the weight loss with a thermogravimetric analyzer (TGA-7 mfd. by Perkin Elmer).

### (3) DETERMINATION OF AMOUNT OF CARBOXYL END GROUPS [CEG]

The amount [CEG] of carboxyl end groups was determined by dissolving a sample as described above in benzyl alcohol kept at 215°C in 10 minutes and titrating the obtained solution with a 0.01 N aqueous solution of sodium hydroxide.

### (4) DETERMINATION OF AMOUNT OF SULFONATE SALT INTRODUCED

The amount of the sulfonate salt introduced was determined by measuring the alkali metal content by fluorescent X-ray analysis and was expressed in milliequivalent (meq/kg) per kilogram of the polymer. It has been ascertained that the amount thus determined is nearly equal to the value calculated from the amount of the salt fed in the preparation of the polyester.

### (5) DETERMINATION OF TENSILE ELONGATION

Tensile elongation at an ordinary temperature (23°C) was examined with ASTM No. 1 tensile test pieces which were molded under the same conditions as those described in the item (1). The average tensile elongation of ten pieces is given in the Table.

### EXAMPLES 1 TO 4 AND COMPARATIVE EXAMPLES 1 TO 5

220.3 parts by weight of dimethyl terephthalate, 153.2 parts by weight of 1,4-butanediol, sodium 4-(2-hydroxyethoxy)benzenesulfonate (I-a) (in a variable amount) and 0.14 part by weight (80 ppm in terms of titanium based on the polymer) of titanium tetrabutoxide were fed into a reactor fitted with an agitator and a distilling column. The resulting reaction system was fully purged with nitrogen and the contents were heated to 160°C under normal pressure, followed by the initiation of agitation. The temperature of the contents was gradually raised to distill away the methanol formed as a by-product. When the amount of the methanol distilled away exceeded 90% by weight of the theoretical amount, the temperature of the contents reached 210°C. The reaction mixture was transferred to another reactor and the pressure of this system was reduced to 0.1 Torr (13 Pa) in one hour, while the temperature of the contents was raised up to 240°C to 260°C. The contents were agitated in a vacuum of 0.1 Torr (13 Pa) for about 2.5 to 3 hours and the resulting melt was extruded through a nozzle as a strand, which was cooled with water, dried by passing it though hot air, and pelletized.

The intrinsic viscosity of the polyester thus prepared was determined in o-chlorophenol at 25°C and the above characteristics thereof were determined. In the determination of the amount of gas evolved, four kinds of gases, i.e., 1-butene, acrolein, tetrahydrofuran and 3-buten-1-ol were detected. The results are given in the first part of Table 1. For comparison, a polyester prepared without using any aromatic sulfonic acid compound (Comparative Example 1), polyesters wherein the amount of the salt (I-a) introduced is outside the range according to the present invention (Comparative Examples 2 and 5) and polyesters wherein the ratio of the amount of the salt (I-a) introduced to the amount of the carboxyl end groups is outside the range defined by the above formula (3) (Comparative Examples 1 to 5) were also evaluated in the same manner as that described above. The results are also given in the first part of Table 1.

A switch-shaped test piece having a metal terminal inserted therein was prepared by insert molding using the same pelletized polybutylene terephthalate as that used above and allowed to stand in a hermetically sealed container at 150°C for one month. The resulting metal terminal was observed with the naked eye to evaluate its surface gloss. The metal terminals of the test pieces prepared from the polyesters of Examples 1 to 4 exhibited little tarnish, while those prepared from the polyesters of Comparative Examples 4 and 5 exhibited moderate tarnish and those prepared from the polyesters of Comparative Examples 1 to 3 were considerably tarnished.

### EXAMPLES 5 TO 7 AND COMPARATIVE EXAMPLES 6 AND 7

Modified polybutylene terephthalates were prepared by melt polymerization in the same manner as that of the Example 2 except that the sodium 4-(2-hydroxyethoxy)benzenesulfonate (I-a) was replaced by sodium 4-(2-hydroxypropoxy)benzenesulfonate (I-b), sodium 4-(2-hydroxyethoxyethoxy)benzenesulfonate (I-c) or sodium 2-(2-hydroxyethoxy)naphthalene-6-sulfonate (I-d). The results are given in the second part of Table 1.

Polybutylene terephthalates for comparison were also prepared by using 4-methylbenzenesulfonic acid (I'-e) or dimethyl sodium sulfophthalate (I'-f) which is different from the compound represented by the general formula (1) in respect of structure, and these were also evaluated in a similar manner to that described above. The results are again given in the second part of Table 1.

### EXAMPLE 8 AND COMPARATIVE EXAMPLE 8

220.3 parts by weight of dimethyl 2,6-naphthalenedicarboxylate, 153.2 parts by weight of 1,4-butanediol, 0.27 part by weight of sodium 4-(2-hydroxyethoxy)benzenesulfonate and 0.14 part by weight (80 ppm in terms of titanium based on the polymer) of titanium tetrabutoxide were fed into a reactor fitted with an agitator and a distilling column. The resulting reaction system was fully purged with nitrogen and the contents were heated to 160°C under normal pressure, followed by the initiation of agitation. The temperature of the contents was gradually raised to distill the methanol formed as a by-product. When the amount of the methanol distilled away exceeded 90% by weight of the theoretical amount, the temperature of the contents reached 210°C. The reaction mixture was transferred to another reactor and the pressure of this system was reduced to 0.1 Torr (13 Pa) in one hour, while the temperature of the contents was raised up to 260°C. The contents were agitated in a vacuum of 0.1 Torr (13 Pa) for 2.0 hours and the resulting melt was extruded through a nozzle as a strand. This strand was cooled with water, dried by passing it through hot air, and pelletized.

The intrinsic viscosity of the polymer thus prepared was determined in o-chlorophenol at 25°C and the above characteristics thereof were also determined. In the determination of the amount of gas evolved, four kinds of gases, i.e., 1-butene, acrolein, tetrahydrofuran and 3-buten-1-ol were detected. The results are given in the third part of Table 1. For comparison (Comparative Example 8) another polybutylene naphthalate was prepared without using any aromatic sulfonic acid compound and evaluated in the same manner as that described above. The results are also given in the third part of Table 1.

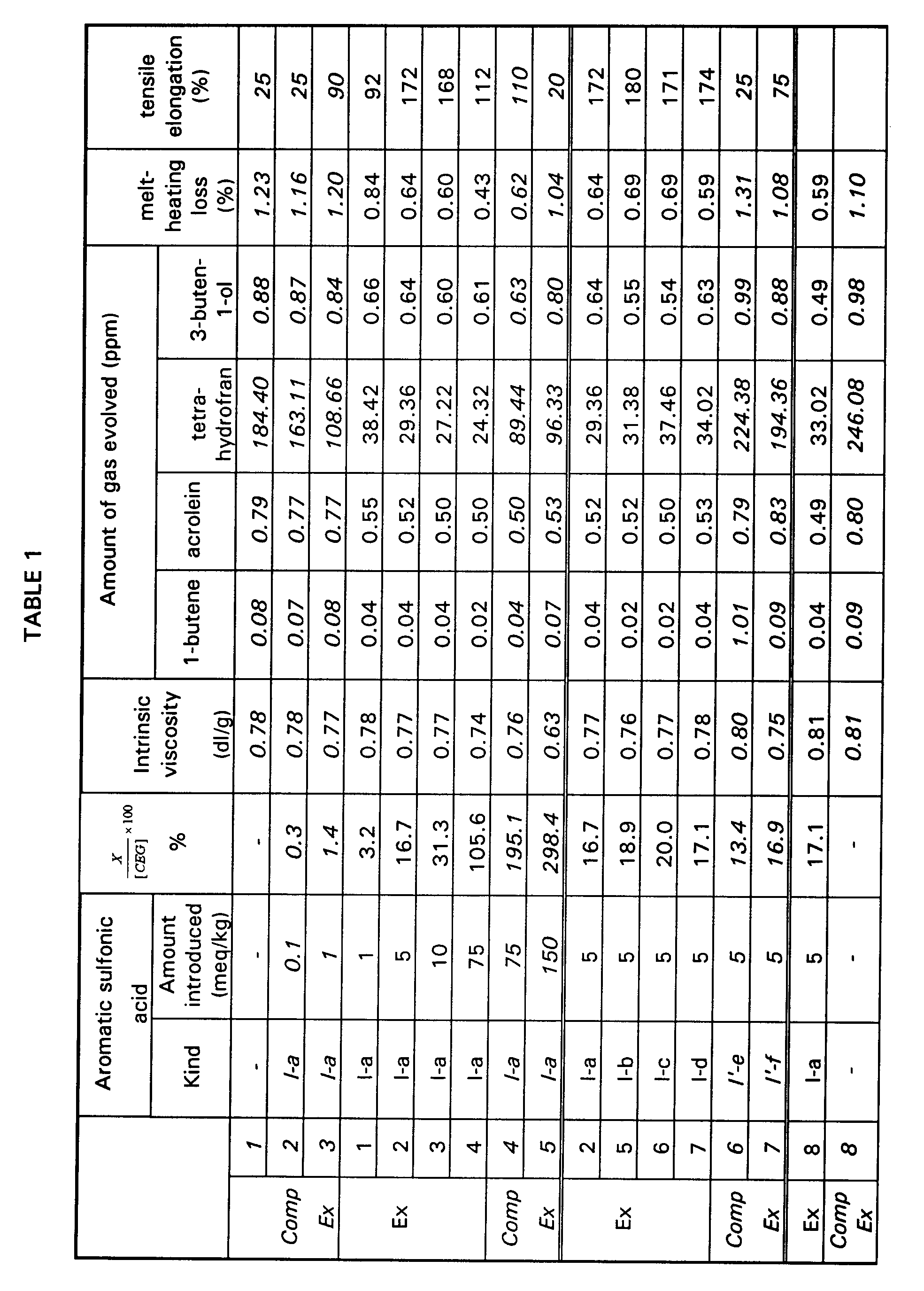

## Claims

1. A modified polyester characterized by its formation from:
**(A)** an acid component mainly comprising terephthalic acid, 2,6-naphthalenedicarboxylic acid or a lower alcohol ester thereof,
**(B)** a diol component mainly comprising an alkylene glycol having 2 to 8 carbon atoms, and
**(C)** an aromatic sulfonic acid compound of the following general formula (1):
(1) HO(RO)ₙ-Ar-SO₃M
wherein **Ar** represents a benzene or naphthalene ring,
**n** represents an integer from 1 to 10,
**R** represents a group selected from among alkylenes having 2 or 3 carbon atoms and when **n** is 2 or more, **R** may be the same as or different from one another, and
**M** represents an alkali metal selected from lithium, sodium and potassium, and satisfying the following formulae (2) and (3):
(2) 0.25 ≦ x ≦ 100 (meq/kg)
(3) 2 ≦ (x/[CEG]) x 100 ≦ 150 (%)
wherein **x** represents the amount of the aromatic sulfonic acid compound represented by the above general formula (1) introduced thereinto and [CEG] represents the amount of the carboxy end groups, and
**x** and [CEG] are each expressed in milliequivalent (meq/kg) per kilogram of the polymer.

2. The modified polyester according to Claim 1, wherein the alkylene glycol (B) having 2 to 8 carbon atoms mainly comprises 1,4-butanediol.

3. The modified polyester according to Claim 1 or 2, wherein the polyester is a copolyester containing one or more comonomers of components (A), and (B) in an amount of at most 30 mole % based on all the repeating ester units.

4. The modified polyester according to Claim 3, wherein the polyester is a copolyester containing one or more comonomers of components (A), and (B) in an amount of at most 20 mole %, based on all the repeating ester units.

5. A modified polyester according to any one of claims 1 to 4, wherein **x** in formula (2) is between 0.5 and 50 meq/kg.

6. A modified polyester according to any one of claims 1 to 5, wherein 3 ≦ (x/[CEG] ) x 100 ≦ 120 (%).

7. A molding for an electric or electronic component made by molding the modified polyester according to any preceding Claim or a composition comprising the same.

8. A film, sheet or container made by molding the modified polyester according to any preceding Claim or a composition comprising the same.

9. A method of manufacturing a modified polyester characterized by reacting in the presence of a catalyst:
**(A)** an acid component mainly comprising terephthalic acid, 2,6-naphthalenedicarboxylic acid or a lower alcohol ester thereof,
**(B)** a diol component mainly comprising an alkylene glycol having 2 to 8 carbon atoms, and
**(C)** an aromatic sulfonic acid compound of the following general formula (1):
(1) HO(RO)ₙ-Ar-SO₃M
wherein **Ar** represents a benzene or naphthalene ring,
**n** represents an integer from 1 to 10,
**R** represents a group selected from among alkylenes having 2 or 3 carbon atoms and when **n** is 2 or more, **R** may be the same as or different from one another, and
**M** represents an alkali metal selected from lithium, sodium and potassium, and satisfying the following formulae (2) and (3):
(2) 0.25 ≦ x ≦ 100 (meq/kg)
(3) 2 ≦ (x/[CEG]) x 100 ≦ 150 (%)
wherein **x** represents the amount of the aromatic sulfonic acid compound represented by the above general formula (1) introduced thereinto and [CEG] represents the amount of the carboxy end groups, and
**x** and [CEG] are each expressed in milliequivalent (meq/kg) per kilogram of the polymer.

10. A method according to claim 9, wherein the aromatic sulfonic acid component (C) is incorporated in the reaction mixture before completion of esterification or transesterification of said acid and diol components (A) and (B).
